# EUROPEAN PATENT APPLICATION

(11) **EP 4 718 934 A1**
(43) Date of publication of application: **01.04.2026**
(21) Application number: 24203713.3
(22) Date of filing: 30.09.2024
(51) Int. Cl.: H04W 74/04, H04W 28/02, H04W 28/16

(54) **COLLISION REDUCTION IN WIRELESS NETWORKS**

(71) Applicant: British Telecommunications public limited company, London E1 8EE (GB)
(72) Inventor: SCAHILL, Francis, London, E1 8EE (GB)
(74) Representative: British Telecommunications public limited company Intellectual Property Department

(57) **Abstract**

A method of managing the transmission of unicast packets in a wireless local area network to client devices that are sensitive to collisions from transmissions to other client devices. These client devices that are sensitive to collisions, termed collision sensitive nodes, are typically associated with a problem access point, which are access points that share a coverage area with another access point but are not themselves in direct communication range of each other. A collision sensitive node is paired with each client device that is associated with the other access point to generate a respective collision node pair. Unicast packets directed to any client device in a collision node pair are scheduled to introduce a delay to their delivery so as to reduce the likelihood causing a collision at the collision sensitive node.

## Description

### Field of the Invention

This invention relates to managing the transmission of packets in a wireless local area network, in particular to reduce packet collisions experienced by receiving nodes.

### Background to the Invention

Enterprise Wi-Fi networks will typically have many wireless access points (APs), and more recently residential Wi-Fi networks have increasingly incorporated multiple wireless APs to provide complete coverage across the home. Note, the term access point (AP) and wireless AP will be used interchangeably in this description. Often the coverage area of individual APs will be such that two (or more) APs will have regions where there is a shared wireless coverage area, but where the two APs are not in direct Wi-Fi communication range of each other. These two APs are sometimes referred to as "hidden nodes", as they are devices that are out of range of each other, but both are in range a third device.

In Wi-Fi networks, each device contends with neighbouring devices for access to airtime. Devices typically use a technique called Enhanced Distributed Channel Access (EDCA) to determine whether and when to transmit. In EDCA, each device wanting to transmit listens to see if anyone else is transmitting. If any other device is transmitting, the device wanting to transmit waits till any other device has finished transmitting, and then waits a further short random interval. If the channel is free at that point, the device wanting to transmit can do so.

EDCA works well when all devices in the network can hear each other. However, if there are "hidden nodes" as described above, there can be problems when the two ("hidden") devices transmit at the same time, as the third device will hear overlapping transmissions so cannot decode them. This results in transmission errors and triggers standard Wi-Fi mechanisms such as retransmission and rate adaption, which lowers the overall capacity and throughput of the network.

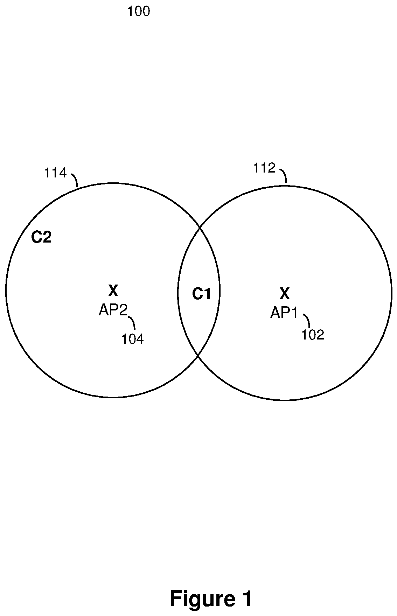

This problem is illustrated in Figure 1, which shows two access points AP1 102 and AP2 104 together with their respective wireless coverage areas 112 and 114. As can be seen

AP1 and AP2 are hidden from each other in so far as each of their wireless coverage areas do not cover the other AP. A client device C1 is associated with AP1 102 and is located in the overlapping coverage area 112 and 114 of AP1 and AP2. A client device C2 is associated with AP2 and located within only coverage area 114 of AP2 104. Consequently, client device C1 is susceptible to overlapping transmissions from AP1 and AP2. This might occur if AP1 is transmitting to C1, but as the same AP2 is transmitting to C2, which can occur as AP2 will not be aware of what AP1 is doing.

This problem is well known, and the Request to Send (RTS), Clear to Send (CTS) Wi-Fi protocol extensions can deal with this situation for unicast transmissions. However, RTS/CTS introduces additional undesirable overheads and so is typically only used when transmission payloads are sufficiently large, for example greater than 2300 bytes. If a packet has a smaller payload, then it will not be protected by an RTS/CTS exchange. Even when RTS/CTS is used to prevent collisions, the resulting transmissions can be unfairly distributed between nodes with some devices gaining a greater share of the airtime.

### Summary of the Invention

It is the aim of examples of the present invention to provide an improved method of managing the transmission of packets in a Wi-Fi network with hidden nodes.

According to one example of the invention, there is provided a method as set out in claim 1.

According to another example of the invention, there is provided a network element as set out in claim 5.

### Brief Description of the Drawings

For a better understanding of the present invention reference will now be made by way of example only to the accompanying drawings, in which:
Figure 1 is an example arrangement illustrating the hidden nodes problem;
Figure 2 is a system diagram of a network arrangement in an example of the invention;
Figure 3 is a wireless coverage area diagram in an example of the invention;
Figure 4 is a block diagram of an example residential gateway;
Figure 5 is a flow chart summarising the steps of identifying collision node pairs in an example of the invention;
Figure 6 is a flow chart summarising the step of generate traffic queues in an example of the invention;
Figure 7 is a flow chart summarising the steps of scheduling delivery of packets to client devices in an example of the invention;
Figure 8a is a diagram illustrating the queuing of packets in an example of the invention;
Figure 8b is a diagram illustrating the dequeuing of packets in an example of the invention; and
Figure 8c is a diagram illustrating the receipt and transmission of packets by access points in an example of the invention;

### Description of Preferred Embodiments

The present invention is described herein with reference to particular examples. The invention is not, however, limited to such examples.

Examples of the present invention provide a method of managing the transmission of unicast packets in a wireless local area network to client devices that are sensitive to collisions from transmissions to other client devices. These client devices that are sensitive to collisions, termed collision sensitive nodes, are typically associated with a problem access point, which are access points that share a coverage area with another access point but are not themselves in direct communication range of each other. A collision sensitive node is paired with each client device that is associated with the other access point to generate a respective collision node pair. Unicast packets directed to any client device in a collision node pair are scheduled to introduce a delay to their delivery so as to reduce the likelihood causing a collision at the collision sensitive node.

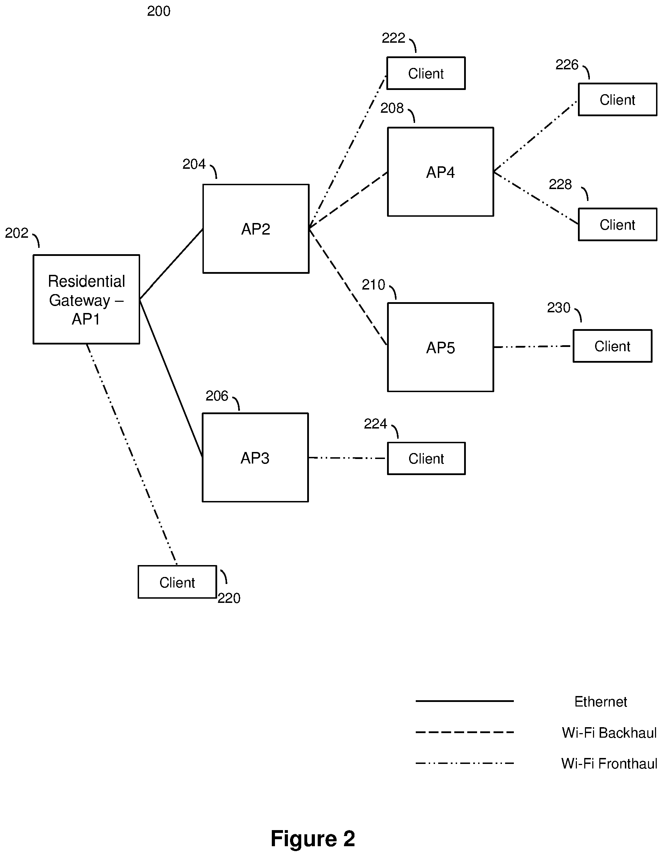

Figure 2 shows a simplified architecture diagram of an example wireless local area network (WLAN) 200 comprising a residential gateway 202 that also includes a wireless access point, AP1. The residential gateway 102 is connected to a wide area network (WAN) over, for example, a digital subscriber line (DSL) connection. The residential gateway 202 is connected to wireless access points AP2 204 and AP3 206 over Ethernet links. AP2 204 is further connected to wireless access points AP4 208 and AP5 110 over respective Wi-Fi backhaul connections. The WLAN 100 also comprises a number of wireless client devices 220, 222, 224, 226, 228 and 230, each of which can be connected to any of the APs depending on their relative locations. In Figure 2, there is shown exemplary connections between the client devices and the APs.

The various wireless APs and client devices operate according to the IEEE 802.11 standard, allowing them to communicate with each other wirelessly. The WLAN 200 shown is exemplary and a skilled person will appreciate that additional or fewer elements than those shown may be present in practice, and may also be connected differently.

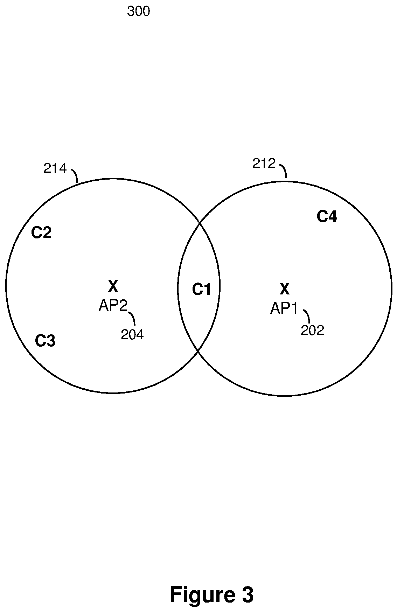

Figure 3 is a simplified wireless coverage area diagram (similar to that of Figure 1), based on the elements from Figure 2, and will be used to illustrate examples of the invention. In this example, there are access points AP1 202 and AP2 204 together with their respective wireless coverage areas 212 and 214. Again, AP1 and AP2 are hidden from each other in so far as each of their wireless coverage areas do cover the other AP. AP1 and AP2 in such a scenario may be referred to as "hidden nodes" or "problem APs".

A client device C1 is associated with AP1 202 and is located in the overlapping coverage area 212 and 214 of AP1 and AP2. Client devices C2 and C3 are both associated with AP2 214 and both located within only coverage area 214 of AP2 204. Client device C4 is associated with AP1 202, and within only the coverage area 212 of AP1 202. Client device C1 is susceptible to overlapping transmissions from AP1 and AP2. This might occur if, for example, AP1 is transmitting to C1, but at the same AP2 is transmitting to C2 or C3, which can occur as AP2 will not be aware of what AP1 is doing. A client device such as C1 that is susceptible to overlapping transmissions may be referred to as a "collision sensitive node".

Examples of the invention are realised by two main modules: a Collision Sensitive Node Detector and a Collision Avoidance Traffic Scheduler. Each of these modules may be implemented as software modules running on one or more of the elements in the WLAN 200.

The Collision Sensitive Node Detector can run on any single element in the WLAN 100, but preferably on the residential gateway 202. The Collision Sensitive Node Detector is responsible for identifying , problem APs, collision sensitive nodes, and generates lists of "collision node pairs", the significance and use of which will be described herein below.

The Collision Avoidance Traffic Scheduler reduces the likelihood of a collision by altering the packet delivery schedule (for example, by introducing time delays between selected packets) to downstream APs for client devices identified in collision node pairs. The Collision Avoidance Traffic Scheduler can be implemented anywhere where the network path branches to multiple downstream APs. For example, if a network has an access point A that has two downstream access points B and C connected to it, the Collision Avoidance Traffic Scheduler could be implemented at access point A prior to forwarding packets to access points B and C.

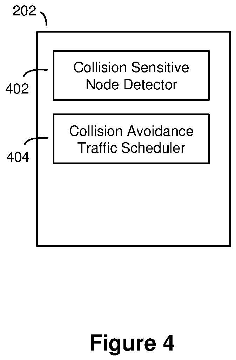

To illustrate where the modules can be located, Figure 4 shows the residential gateway 202 comprising a Collision Sensitive Node Detector 402 and a Collision Avoidance Traffic Scheduler 404.

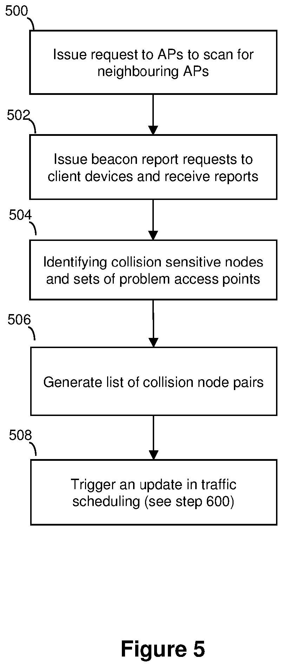

Figure 5 is a flow chart illustrating the operation of the Collision Sensitive Node Detector 402 in an example of the invention.

In step 500, the Collision Sensitive Node Detector 402, here located in the residential gateway 202, asking each AP to passively listen for beacon frames transmitted by other APs to report the signal strength at which it sees each of the other APs in the network. The APs respond with the reports, which are received by Collision Sensitive Node Detector 402. Alternatively, the AP can send a broadcast probe request, and if other APs are in range they will respond.

In step 502, the Collision Sensitive Node Detector 402 also requests to each AP in the network to issue 802.11k Beacon Measurement Report Requests to each client device associated with that AP, asking each client device to report on the signal strength at which that client device sees all the APs in the network 100. Note that step 502 can be triggered out of sequence, for example, when a client device moves and associates with a new AP, at periodic intervals, or upon some other trigger.

In step 504, the Collision Sensitive Node Detector 402 identifies sets of problem APs that comprise of a first AP that overlaps in coverage area with the coverage area of another AP, but where the coverage area of the other AP does not cover the location of the first AP. These problem APs are APs that are present in a client Beacon Measurement Reports but aren't present in the AP scan reports (or passive scan reports).

Having identified which APs are hidden from each other, the Collision Sensitive Node Detector 402 reviews the client Beacon Reports to determine for each AP whether any client devices that can see that AP can also see one or more APs that are hidden from that AP, whilst optionally noting the corresponding signal strengths (for example the received signal strength indicator RSSI).

For each of the client devices identified in this manner, the Collision Sensitive Node Detector 402 optionally compares the signal strengths at which the client sees the APs. For example, if the client device is say very close to its parent AP (the AP with which it is associated) and very far from the other AP, then the signal to noise ratio (SNR) of the broadcast packet transmitted by the parent AP may be high enough to decode any broadcast packet received from the parent AP even in the presence of the broadcast packet from the other AP, and so this client device does not experience a problem with its parent AP. However, there may be an issue in the reverse situation where the client device is associated with the "other" AP. A signal strength test is conducted to determine when a problematic situation arises, by determining the signal strength difference between the client device's parent AP and other AP. If the difference in signal strength is less than a specified threshold, then that client device is identified as a "collision sensitive node", and the corresponding APs that the collision sensitive nodes can see are identified as a set of "problem APs". The result may be a number of collision sensitive nodes, each having a corresponding set of two or more problem APs.

However, in a simplified alternative, there is no signal strength testing or processing, and the assumption is that a unicast packet transmitted by two APs that are visible by a client device but not to each other will interfere and cause a decoding error. Thus, any APs that satisfy this simplified criteria can be considered as "problem APs".

To illustrate, reference is made to Figure 3, where it can be seen that AP1 202 has an overlapping coverage area 212 with the coverage area 214 of AP 204, but neither coverage area covers that of the other AP. Here, client device C1 is associated with its parent access point AP1, but is also in the coverage area of AP2, and thus is deemed to be a collision sensitive node. AP1 202 and AP2 204 constitute a set of problem APs.

In step 506, the Collision Sensitive Node Detector 402 identifies collision node pairs, generating a list. This can be done by first taking a collision sensitive node, and retrieving the list of clients devices associated with the other access point(s) in the set of problem access points that the collision sensitive node's parent access point is a part of. One or more collision node pairs are then generated, one for each collision sensitive node and a client device from the list. Referring back to Figure 3, C1 is a collision sensitive node and is associated with AP1, which is in a set of problem APs with AP2. Thus, the Collision Sensitive Node Detector 402 retrieves the list of client devices associated with AP2, which are C2 and C3. The resulting set of collision node pairs that is created is {(C1,C2),(C1,C3)}, which can be added to a global set of collision node pairs. This can be repeated for each collision sensitive node in the network 200.

If at any point a client device disassociates from an AP, then any collision node pairs containing that client device are removed from the global list. Also, as noted above, if a client device associates with a new AP, then the process (starting from step 502) can be repeated to identify any potentially new collision node pairs.

Exploring the example of Figure 3 further, it can be seen that AP1 102 and AP2 104 are hidden from each other and thus constitute a set of problem APs. Client device C1 is within range of both APs and is sensitive to overlapping transmissions as a result of AP2 transmitting to either of C2 or C3. As described above, collision node pairs (C1,C2) and (C1 ,C3) are created. Client device C4 is associated with AP1 102, and thus transmissions from AP1 202 to C4 will automatically be handled without collisions by AP1, as C1 is also associated with AP1.

If C1 subsequently disassociates from AP1 then collision node pairs (C1,C2) and (C1,C3) are removed from the global collision pair list. If C1 moves location such that AP2 is no longer reported in the periodic Beacon Report response then collision node pairs (C1,C2) and (C1,C3) are removed from the global collision node pair list.

The process described from steps 500 to 506 can be repeated if there is a change in APs, client devices, client device movement/associations, as suggested earlier, or indeed at some interval, potentially resulting in an update to the collision node pairs.

Whenever the global list of collision node pairs is generated or updated after step 506, processing passes to step 508 where update to traffic scheduling is triggered.

Traffic scheduling is handled by the Collision Avoidance Traffic Scheduler 404.

The job of the Collision Avoidance Traffic Scheduler 404 is to reduce the likelihood that packets destined for collision sensitive nodes will have transmission times that overlap with potential sources of interference. Recall, in a collision node pair, one of the client devices in each collision node pair is the collision sensitive node, and the other client device is the potential source of interference. The Collision Avoidance Traffic Scheduler 404 can achieve its aim of reducing interference by introducing a forwarding delay between consecutive packets that are transmitted over unicast to client devices that form a collision node pair. This effectively time shifts packets to the APs transmitting packets to the respective client devices of a collision node pair.

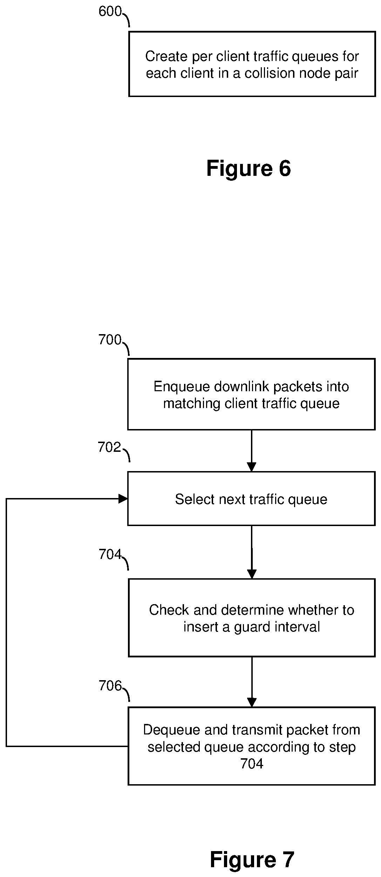

So, step 508 triggers an update in traffic scheduling by the Collision Avoidance Traffic Scheduler 404, with the update shown in step 600 of Figure 6.

In step 600, the Collision Avoidance Traffic Scheduler 404 generates or updates a new traffic queue for each client device in any set of collision node pairs in the global list of collision node pairs, as well as a non-CSN (collision sensitive node) traffic queue for client devices that are not in any of the global list of collision node pairs. So, following on from the earlier example if we assume the global list of collision nodes is {(C1,C2),(C1,C3)}, then there would be a non-CSN (non-collision sensitive node) queue, a queue for C1, a queue for C2, and a queue for C3. The purpose of these queues is to store the buffered data packets for transmission, and the way in which they are used will now be described with reference to Figure 7.

Figure 7 is a flow chart summarising the steps of how the Collision Avoidance Traffic Scheduler 404 goes on to enqueue and dequeue received packets to and from the traffic queues generated in step 600.

In step 700, the Collision Avoidance Traffic Scheduler 404 receives a sequence of downlink packets and enqueues each packet into the queue associated with the destination of the packet. For example, if the destination of the packet is C1, then it moves the packet to the C1 queue. If the destination of the packet does not match that of any of the specific queues, then it is moved to the non-CSN queue (for example if the destination of the packet is C4).

Step 700 is repeated continuously whilst packets are being received into the network 200.

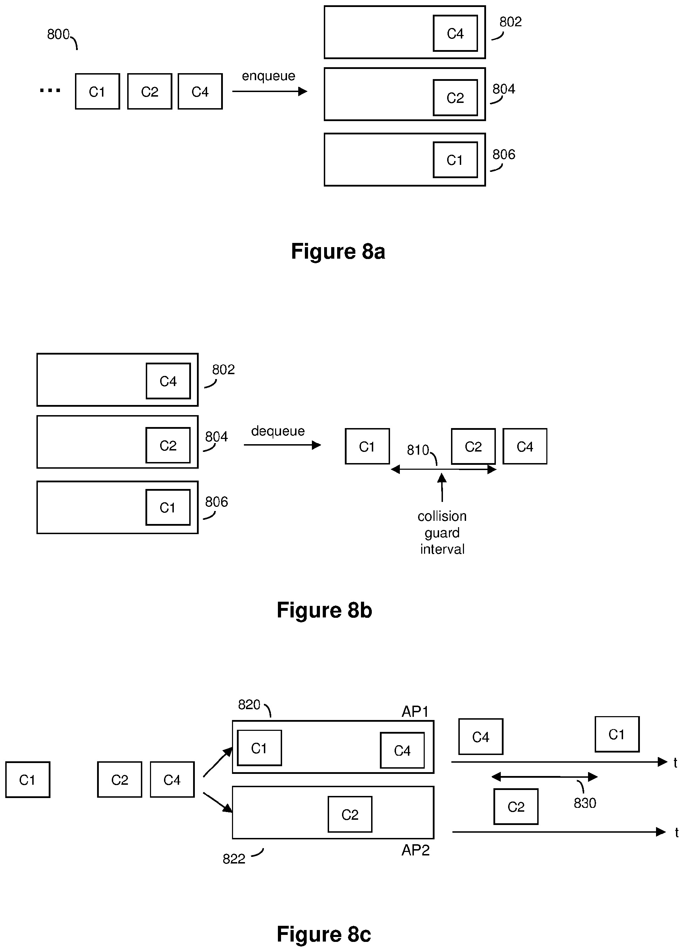

The enqueuing of packets is illustrated in a simplified example of Figure 8a, where downlink packets 800 having destinations of C4, C2 and C1 are received in turn. Packet for destination C4 is moved into the non-CSN queue 802, packet for C2 is moved into the C2 queue 804, and packet for C1 is moved into the C1 queue 806.

Whilst step 700 is taking place, the Collision Avoidance Traffic Scheduler 404 cycles through the traffic queues to select packets for dequeuing and transmission. The cycling through of the traffic queues can use various known methods, such as a simplistic round robin approach with for example a minimum or a more complex credit based fair queuing approach as described in "Credit-based fair queueing (CBFQ): a simple and feasible scheduling algorithm for packet networks" by Bensaou et al, IEEE ATM '97 Workshop Proceedings, 25-28 May 1997. Thus, in step 702, a traffic queue is selected.

Whenever the Collision Avoidance Traffic Scheduler 404 selects the next queue to dequeue it makes various checks in step 704:
a) Scheduler 404 determines if the time since the previous dequeue operation from any queue is greater than a threshold, such as a collision guard interval, the packet (in the selected queue) can be dequeued immediately
b) Scheduler 404 determines if the time since the most recent dequeue operation with a packet that is in a collision node pair is greater than the collision guard interval (there may be a more recent dequeue operation with a packet from the non-CSN queue), and
   i) the Collision Avoidance Traffic Scheduler 404 can dequeue a packet from the non-collision sensitive node queue before resuming dequeuing from the currently selected collision sensitive queue, or
   ii) if there are no packets available in the non-collision sensitive node queue then the Collision Avoidance Traffic Scheduler 404 can insert a predetermined time delay (the collision guard interval) before dequeuing the packet from the selected collision sensitive queue. The collision guard interval is inserted from the start of dequeuing the previous packet to the start of the current packet. This collision guard interval may be set to say 200usec, or some other suitable interval that ensures the likelihood of later collision is avoided or at least minimised.

The collision guard interval may be varied depending on the PHY rate and/or packet size of the last transmitted packet to a client device in a collision node pair, thus enabling the guard interval to be varied according to the expected transmission duration of the preceding packet. For example, if the previous packet transmitted was in a collision node pair and was large, then the collision guard interval can be increased to reduce the risk of colliding with that previous packet.

In an alternative approach, when a queue has been selected and there are multiple packets available in the queue, then multiple packets can be dequeued from this queue and transmitted onwards before selecting the next queue. This will serve to increase the likelihood of frame aggregation over the air and increase channel efficiency.

Step 706 describes the process of dequeuing and onward transmission of the packet or packets towards their destination.

Figure 8b illustrates the steps of 702 to 706, which shows the queues 802, 804 and 806 from Figure 8a being processed in turn. Here, the non-CSN queue 802 is first selected Collision Avoidance Traffic Scheduler 404, and the packet dequeued and transmitted towards the destination client device C4. The next queue selected is the C2 queue 804. C2 and C4 are not in any collision node pair, and so the packet for C2 is immediately dequeued and transmitted. The next queue selected is the C1 queue 806. However, C1 and C2 are in a collision node pair, and thus the Collision Avoidance Traffic Scheduler 404 inserts a delay 810, equal to the collision guard interval, before dequeuing and transmitting the packet for C1. If the non-CSN queue 802 had any packets in it, the Collision Avoidance Traffic Scheduler 404 could select from the non-CSN queue 802 instead of the C4 queue 806 as described earlier. This would be a more efficient use of the channel.

Figure 8c illustrates the receipt of the transmitted packets with the collision guard interval by the access points AP1 and AP2. Packet C1 is received first by AP1 and stored in its buffer 820 for transmission over the wireless interface. Packet C2 is received next by AP2 and stored in its buffer 822. Then a short while later (approximately the collision guard interval), packet C1 is received by AP1 and stored in its buffer 820. Now whilst all three packets are shown to be in the buffers 820 and 822 at the same time, in practice, AP1 may start transmission of packet C4 over the air to client device C4 before either of the later packets C2 and C1 are received. This will depend on the operation of the buffer at the access points.

Moving further right in the Figure 8c, it can be seen that packet C4 is transmitted first by AP1, but before transmission of C4 has completed, AP2 starts to transmit C2. This is not a problem, as C4 and C2 are not in a collision node pair. Packet C1 is transmitted by AP1 a time interval 830 after packet C2, with which it is in a collision node pair. However, the time delay introduced during the dequeuing process described earlier (and shown in Figure 8b) ensures that the time interval 830 between these packets C2 and C1 is sufficient to avoid collisions. The actual time delay 830 may not be exactly the same as that of the collision guard interval set earlier due to channel access delay differences between AP1 and AP2.

Therefore, it can be seen that careful use of collision guard intervals in examples of the present invention help reduce the risk of collisions between packets to certain client devices.

In general, it is noted herein that while the above describes examples of the invention, there are several variations and modifications which may be made to the described examples without departing from the scope of the present invention as defined in the appended claims. One skilled in the art will recognise modifications to the described examples.

## Claims

1. A method of managing the transmission of packets in a wireless local area network, the wireless local area network comprising a plurality of access points and a plurality of client devices wherein each of the client devices is associated with one of the access points, the method comprising the steps of:
identifying a set of problem access points, wherein the set of problem access points comprises a first access point and a second access point from the plurality of access points, the first access point and the second access point having an overlapping coverage area and a respective coverage area of the second access point does not cover the first access point;
identifying one or more pairs of client devices, wherein each pair of client devices comprises a first client device that is associated with one of the access points in a set of problem access points and also in the coverage area of the other access point in the set of problem access points and a second client device that is associated with the other access point;
receiving a plurality of packets for onward transmission, each having a destination of one of the plurality of client devices;
transmitting each packet to its respective destination;
wherein for each packet being transmitted,
when the time between transmitting said packet and an earlier transmitted packet whose respective destinations constitute a pair of client devices is less than a threshold, inserting a predetermined time interval prior to transmission of said packet or first transmitting a received packet with a destination that is not one of the client devices in any of the one or more pairs of client devices.

2. The method as claimed in claim 1, wherein the time interval is between said packet and the previous packet, which have destinations that together matches that of one of the pairs of client devices.

3. The method as claimed in claim 2, wherein each received packet is held in a queue prior to being transmitted, and time interval is inserted by delaying the dequeuing of said packet relative to the previous packet.

4. The method as claimed in any preceding claim, wherein the packets are unicast packets.

5. A network element for managing the transmission of packets in a wireless local area network, the wireless local area network comprising a plurality of access points and a plurality of client devices wherein each of the client devices is associated with one of the access points, the network element adapted in operation to:
identify a set of problem access points, wherein the set of problem access points comprises a first access point and a second access point from the plurality of access points, the first access point and the second access point having an overlapping coverage area and a respective coverage area of the second access point does not cover the first access point;
identify one or more pairs of client devices, wherein each pair of client devices comprises a first client device that is associated with one of the access points in a set of problem access points and also in the coverage area of the other access point in the set of problem access points and a second client device that is associated with the other access point;
receive a plurality of packets for onward transmission, each having a destination of one of the plurality of client devices;
transmit each packet to its respective destination;
wherein for each packet being transmitted,
when the time between transmitting said packet and an earlier transmitted packet whose respective destinations constitute a pair of client devices is less than a threshold, insert a predetermined time interval prior to transmission of said packet or first transmitting a received packet with a destination that is not one of the client devices in any of the one or more pairs of client devices.
